# EUROPÄISCHE PATENTSCHRIFT

(11) **EP 0 673 754 B1**
(45) Veröffentlichungstag und Bekanntmachung des Hinweises auf die Patenterteilung: **03.09.1997**
(21) Anmeldenummer: 95101963.7
(22) Anmeldetag: 14.02.1995
(51) Int. Cl.: B29D 30/02, B29C 70/74, B60C 11/14, B29D 31/00, B29K 75/00

(54) **Verfahren zum Herstellen eines Laufbelages eines Rades oder einer Rolle und Laufbelag eines Rades oder einer Rolle**
Process for manufacturing the tread section of a wheel or a roller and article manufactured by such a method
Procédé de fabrication de la bande de roulement d'une roue ou d'un rouleau et produit fabriqué par ce procédé

(30) Priorität: 25.03.1994 DE 4410373
(43) Veröffentlichungstag der Anmeldung: 27.09.1995
(73) Patentinhaber: RÄDER-VOGEL Räder- und Rollenfabrik GmbH & Co., 21109 Hamburg (DE)
(72) Erfinder: Henning, Dieter, c/o Fa. Räder-Vogel Räder- und, D-21109 Hamburg (DE); Horstmann, Reinhard, c/o Räder-Vogel Räder- und, D-21109 Hamburg (DE)
(74) Vertreter: Siemons, Norbert, Dr.-Ing. Patentanwälte Hauck, Graalfs, Wehnert, Döring, Siemons

(56) Entgegenhaltungen:
- DE-A- 2 101 224
- DE-A- 3 500 894
- DE-C- 565 113
- FR-A- 2 388 852
- GB-A- 2 044 191
- US-A- 3 115 178
- US-A- 3 227 200

## Beschreibung

Gegenstand der Erfindung ist ein Verfahren zum Herstellen eines Laufbelages eines Rades oder einer Rolle nach dem Oberbegriff des Anspruches 1 und ein Laufbelag eines Rades oder einer Rolle nach dem Oberbegriff des Anspruches 17.

Die genannten Räder oder Rollen kommen beispielsweise in der Regal- und Flurfördertechnik, der Personenbeförderungstechnik und der Gebäudetechnik zum Einsatz. Sie werden in der Regel aus Gummi oder einem Kunststoff hergestellt. Als Kunststoff kommen insbesondere hochelastische, vernetzte Polyurethan-Elastomere in Betracht. Teilweise erreichen bzw. übertreffen diese die charakteristischen Eigenschaften natürlichen bzw. synthetischen Kautschuks wie elastische Verformbarkeit, hohe Bruchdehnung und Zerreißfestigkeit, Rückprallelastizität, Schwingungsdämpfung und Abriebfestigkeit.

Die genannten Laufbeläge sind insbesondere hinsichtlich der Traktion verbesserungsfähig. Dabei handelt es sich um das Vermögen der Laufbeläge, Antriebs- und Bremskräfte durch Reibung auf die Fahrbahn zu übertragen. Je größer die Reibung oder Bodenhaftung ist, desto besser ist die Traktion. Besonders problematisch ist, eine gute Traktion bei nassen oder verschmutzten Fahrbahnen sicherzustellen.

Ein Verfahren bzw. ein Laufbelag der eingangs genannten Art sind bereits aus der DE-A-21 01 224 bekannt. Die Schrift offenbart einen vulkanisierten Kfz-Luftreifen in Gürtel- oder Diagonalbauweise mit einem in den Laufstreifen eingebetteten, thermoplastischen Kunststoffgranulat. Beim Fahren lösen sich die an der Oberfläche des Reifens befindlichen Teilchen oder werden herausgerissen, so daß diese Oberfläche mit kleinen Kratern übersät ist. Die Schrift lehrt nicht, wie eine gleichmäßige Verteilung des Granulats über den Laufbelag erreicht werden kann.

Davon ausgehend liegt der Erfindung die Aufgabe zugrunde, ein Verfahren zum Herstellen eines Laufbelages eines Rades oder einer Rolle mit einer verbesserten Traktion und einen Laufbelag eines Rades oder einer Rolle mit einer verbesserten Traktion zur Verfügung zu stellen.

Die Lösung der Aufgabe ist in den Ansprüchen 1 und 17 angegeben. Vorteilhafte Ausgestaltungen sind in den Unteransprüchen enthalten.

Der Erfindung liegt der Grundgedanke zugrunde, die positiven Eigenschaften eines Basismaterials mit den vorteilhaften Eigenschaften eines Zusatzmaterials zu kombinieren. Das Zusatzmaterial soll Granulatform und eine größere Weichheit bzw. geringere Härte als das Basismaterial aufweisen. Dann bewirkt es eine verbesserte Traktion. Damit die Granulatkörner in ihrer Ausgangsform im Basismaterial erhalten bleiben und mit diesem beim Fertigungsverfahren nicht verschmelzen, ist ein Zusatzmaterial mit einem höheren Schmelzpunkt als das Basismaterial vorgesehen. Das Gießen der Mischung aus geschmolzenem Basismaterial oder chemischen Bestandteilen desselben und Zusatzmaterial in die Form für den Laufbelag erfolgt bei einer Temperatur unterhalb des Schmelzpunktes des Zusatzmaterials, so daß die Granulatkörner nicht aufgeschmolzen werden. Damit über den gesamten Umfang des Laufbelags und seine gesamte Lebensdauer - also auch bei abgenutzten Belagstärken - eine erhöhte Traktion gewährleistet ist, müssen die Granulatkörnchen über den gesamten Laufbelag und dessen Dicke möglichst gleichmäßig verteilt sein. Hierzu wird ein Zusatzmaterial gewählt, dessen spezifisches Gewicht dem des Basismaterials möglichst gleichkommt. Hierdurch wird verhindert, daß beim Mischen bzw. in der Form die Granulatkörner im flüssigen Basismaterial aufschwimmen und sich an der Oberfläche sammeln oder nach unten sinken und sich auf dem Boden ablagern.

Bevorzugt wird für das Basismaterial und/oder das Zusatzmaterial ein Polyurethan verwendet. Die Materialien können so ausgewählt sein, daß das Basismaterial einen Schmelzpunkt von etwa 110 bis 130°C und das Zusatzmaterial einen Schmelzpunkt von etwa 180 bis 220°C aufweist. Das Basismaterial weist eine größere Shore-Härte als das Zusatzmaterial auf, wobei günstige Traktionswerte bei 92° Shore A des Basismaterials und 80° Shore A des Zusatzmaterials erreicht werden.

Für eine gleichmäßige Abnutzung haben Basismaterial und Zusatzmaterial bevorzugt übereinstimmende Abriebeigenschaften.

Die Traktion wird von dem Mischungsverhältnis des Zusatzmaterials und des Basismaterials beeinflußt. Vorteilhafterweise werden 100 bis 200 g Zusatzmaterial mit etwa 1 kg Basismaterial gemischt. Auch die Größe der Granulatkörner wirkt sich auf die Traktion aus. Bevorzugt beträgt die mittlere Korngröße etwa 3 bis 5 mm.

Die Bestandteile des Basismaterials können im geschmolzenen bzw. flüssigen Zustand miteinander gemischt werden.

Das Zusatzmaterial wird bevorzugt in geschmolzenes Basismaterial eingemischt. Vorzugsweise wird das Granulat vor dem Vermischen mit dem Basismaterial erwärmt, damit die chemische Reaktion des Basismaterials möglichst wenig beeinflußt wird. Gleichzeitig wird durch diese Vorbehandlung erreicht, daß die Oberfläche der Granulatkörner geringfügig plastisch werden und somit optimal am Basismaterial haften. Unter optimal wird dabei verstanden, daß weder eine zu feste, noch eine zu lockere Haftung am Basismaterial erfolgt. Hierdurch werden die Granulatkörnchen weder unlösbar mit dem Basismaterial verbunden, noch liegen sie so lose im Basismaterial, daß sie jederzeit herausfallen können.

Wie oben dargelegt, wird die erhöhte Traktion durch Verwendung verschiedener Werkstoffe bewirkt. Ein vollkommen identisches spezifisches Gewicht von Basismaterial und Zusatzmaterial wird nicht erreicht, so daß das Granulat stets eine Tendenz hat, sich im flüssigen Basismaterial zum Boden oder zur Oberfläche hin abzusetzen. Zur Verringerung des Auftriebs der Körnchen in der flüssigen Mischung wird bevorzugt ein kantiges Granulat verarbeitet. Dieses hat gegenüber einem runden Granulat einen größeren Strömungswiderstand und setzt sich deshalb weniger schnell ab. Eckiges Granulat wird hergestellt, indem ein Ausgangsmaterial - bei dem es sich um rundes Granulat handeln kann - verschmolzen und nach Aushärten beispielsweise in einer Mühle zu eckigem Granulat zerhackt wird. Diese Umformung des Granulatmaterials ist nur bei thermoplastischem Material wie thermoplastischem Polyurethan möglich.

Zwecks Vermeidung eines Auftriebs des Granulats im flüssigen Basismaterial ist ein Einschluß von Luftblasen beim Vermischen zu verhindern. Die hohe Viskosität des flüssigen Basismaterials und die eckige Form der Granulatkörner begünstigen jedoch, daß kleine Luftblasen an den Granulatkörnern haften bleiben und deren Auftrieb erhöhen. Diese Luftblasen sind außerdem schädlich für die mechanischen Eigenschaften des Laufbelages. Sie werden dadurch verhindert, daß die Vermischung von Basismaterial und Granulat beispielsweise durch Rühren unter einem hohen Vakuum erfolgt. Dabei werden bevorzugt zunächst das Prepolymer des Basismaterials und das Granulat gemischt, damit Lufteinschlüsse über eine gewisse Zeit ohne die Gefahr eines Aushärtens freigesetzt werden können. Nach Abschluß der Vermischung kann der Vernetzer des Basismaterials zugegeben und hierdurch der Aushärteprozeß gestartet werden.

Der Durchführung eines Verfahrens mittels einer Gießmaschine stehen normalerweise die geringen Düsenquerschnitte von etwa 0,5 bis 1 mm entgegen, welche Granulat mit einer Korngröße von etwa 3 bis 4 mm nicht durchlassen. Bevorzugt wird deshalb das flüssige Basismaterial mit dem eingemischten Granulat handvergossen, z.B. in freiem Überlauf aus einem Behältnis in eine Form geschüttet.

Die Erfindung wird nachfolgend anhand eines Ausführungsbeispiels näher erläutert, wobei die anliegende Zeichnung ein Rad mit Laufbelag im Querschnitt zeigt:

Das thermoplastische Zusatzmaterial wird bei einer Temperatur von etwa 180 bis 220°C aufgeschmolzen und anschließend ausgehärtet. Danach wird es in einer Mühle zu einem Granulat mit eckiger Form und einer mittleren Korngröße von etwa 3 bis 5 mm zerhackt.

Polyole eines PUR-Heißgießsystemes werden in temperierten Rührbehältern bei einer Temperatur von etwa 110 bis 130°C aufgeschmolzen und durch Anlegen eines Vakuums über eine gewisse Zeit entwässert. Danach erfolgt in einem Reaktionsgerät die Zugabe eines speziellen Isocyanates in einem genau einzuhaltenden Mischungsverhältnis. Es entsteht das Prepolymer, dem ein auf dieselbe Temperatur vorgeheiztes Granulat in einem Mengenverhältnis von 100 bis 200 g Granulat pro kg zugegeben wird. Granulat und Prepolymer werden über eine gewisse Zeit unter Vakuum gemischt und hierdurch weitgehend von Lufteinschlüssen befreit. Nach einer gewissen Misch- und Entgasungszeit wird das Gemisch aus Granulat und Prepolymer entnommen.

Anschließend wird dem Gemisch ein Vernetzer des Basismaterials in einem wiederum vorgegebenen Mengenverhältnis zugegeben. Der Vernetzer wird kurz eingerührt.

Anschließend wird das noch flüssige Gemisch aus Granulat und Basismaterial in eine topfartige Form gegeben, deren Kern von einem Laufrad 1 gemäß Zeichnung gebildet wird. Das Gemisch füllt den Mantelraum und den Kern und härtet darin zu einem Laufbelag 2 aus.

In dem ausgehärteten Laufbelag 2 sind die Granulatkörnchen 3 gleichmäßig über den Basiswerkstoff 4 verteilt. Dies ist auf das etwa übereinstimmende spezifische Gewicht von Granulat 3 und Basismaterial 4 sowie die eckige Form der Körner 3 zurückzuführen.

Durch mechanische Bearbeitung nach dem Aushärten sind die Flanken 5 des Laufbelages 2 angeschrägt.

Die weicheren Granulateinschlüsse 3 (ca. 80° Shore A) und das härtere Basismaterial 4 (ca. 90 bis 95° Shore A) bewirken beim Abrollen, daß sich die Granulatkörner stärker verformen als das Basismaterial. Da die Granulatkörner 3 in dem Basismaterial 4 nicht ausweichen können, entstehen in diesem Bereich des Laufbelages 2 erhöhte Spannungen, die letztendlich eine Erhöhung der Traktion bewirken.

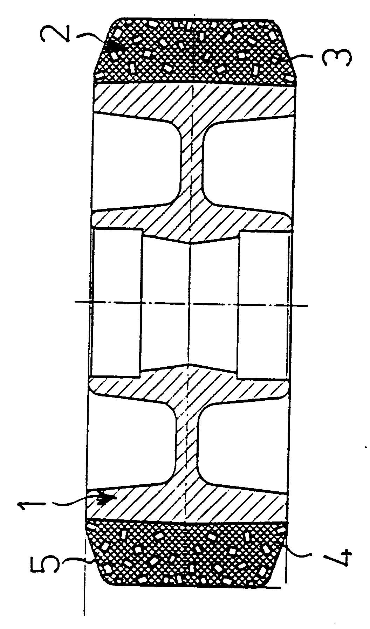

## Patentansprüche

1. Verfahren zum Herstellen eines Laufbelages (2) eines Rades (1) oder einer Rolle, bei dem ein Granulat (3) aus einem thermoplastischen Zusatzmaterial in ein Basismaterial (4) eingearbeitet wird, dadurch gekennzeichnet, daß chemische Bestandteile des elastischen Basismaterials (4) miteinander vermischt werden, das Granulat (3) aus thermoplastischem Zusatzmaterial mit einer größeren Weichheit und einem höheren Schmelzpunkt als das Basismaterial (4) und etwa demselben spezifischen Gewicht wie das Basismaterial (4) mit den Bestandteilen des Basismaterials (4) gemischt wird und die Mischung mit einer Temperatur, die zumindest die Schmelztemperatur des Basismaterials (4), jedoch geringer als die Schmelztemperatur des Zusatzmaterials ist, in die Form für den Laufbelag (2) gegossen wird und darin erstarrt.

2. Verfahren nach Anspruch 1, dadurch gekennzeichnet, daß das Basismaterial (4) und/oder das Zusatzmaterial ein Polyurethan ist.

3. Verfahren nach Anspruch 1 oder 2, dadurch gekennzeichnet, daß chemische Bestandteile des Basismaterials (4) bei einer Temperatur von etwa 110 bis 130°C und das Zusatzmaterial bei einer Temperatur von etwa 180 bis 220°C schmelzen.

4. Verfahren nach einem der Ansprüche 1 bis 3, dadurch gekennzeichnet, daß ein Zusatzmaterial mit einer geringeren Shore-Härte als das Basismaterial (4) verwendet wird.

5. Verfahren nach Anspruch 4, dadurch gekennzeichnet, daß das Basismaterial (4) eine Härte von etwa 90 bis 95° Shore A und das Zusatzmaterial eine Härte von etwa 80° Shore A aufweist.

6. Verfahren nach einem der Ansprüche 1 bis 5, dadurch gekennzeichnet, daß ein Basismaterial (4) und ein Zusatzmaterial mit etwa übereinstimmendem Abriebverlust verwendet werden.

7. Verfahren nach einem der Ansprüche 1 bis 6, dadurch gekennzeichnet, daß etwa 100 bis 200 g Zusatzmaterial mit etwa 1 kg Basismaterial (4) gemischt werden.

8. Verfahren nach einem der Ansprüche 1 bis 7, dadurch gekennzeichnet, daß ein Granulat (3) mit einem mittleren Korndurchmesser von etwa 3 bis 5 mm verwendet wird.

9. Verfahren nach einem der Ansprüche 1 bis 8, dadurch gekennzeichnet, daß ein eckiges Granulat (3) verwendet wird.

10. Verfahren nach einem der Ansprüche 1 bis 9, dadurch gekennzeichnet, daß ein Ausgangs-Zusatzmaterial verschmolzen und nach Aushärten zu einem eckigen Granulat (3) zerhackt wird.

11. Verfahren nach einem der Ansprüche 1 bis 10, dadurch gekennzeichnet, daß die Bestandteile des Basismaterials (4) bei einer Temperatur, die zumindest die Schmelztemperatur des Basismaterials (4) ist, miteinander gemischt werden.

12. Verfahren nach einem der Ansprüche 1 bis 11, dadurch gekennzeichnet, daß das Granulat (3) mit dem geschmolzenen Basismaterial (4) gemischt wird.

13. Verfahren nach einem der Ansprüche 1 bis 12, dadurch gekennzeichnet, daß das Granulat (3) vor dem Mischen mit dem geschmolzenen Basismaterial (4) auf dessen Temperatur erwärmt wird.

14. Verfahren nach einem der Ansprüche 1 bis 13, dadurch gekennzeichnet, daß das Granulat (3) unter Vakuum mit dem Basismaterial (4) gemischt wird.

15. Verfahren nach einem der Ansprüche 1 bis 14, dadurch gekennzeichnet, daß zunächst in ein Prepolymer des Basismaterials (4) das Granulat (3) eingemischt wird und danach ein Vernetzer zur Herstellung des Basismaterials (4) zugegeben wird.

16. Verfahren nach einem der Ansprüche 1 bis 15, dadurch gekennzeichnet, daß das Basismaterial (4) mit dem eingemischten Granulat (3) in die Form handvergossen wird.

17. Laufbelag eines Rades oder einer Rolle, der ein elastisches Basismaterial (4) und ein eingearbeitetes Granulat (3) aus einem thermoplastischen Zusatzmaterial aufweist, dadurch gekennzeichnet, daß das Granulat (3) aus einem Zusatzmaterial mit einer größeren Weichheit und einem höheren Schmelzpunkt als das Basismaterial (4) und etwa demselben spezifischen Gewicht wie das Basismaterial (4) gleichmäßig in das Basismaterial (4) eingemischt ist und das Basismaterial (4) gegossen ist.

18. Laufbelag nach Anspruch 17, dadurch gekennzeichnet, daß das Basismaterial (4) und/oder das Zusatzmaterial ein Polyurethan ist.

19. Laufbelag nach Anspruch 16 oder 18, dadurch gekennzeichnet, daß die chemischen Bestandteile des Basismaterials (4) einen Schmelzpunkt von etwa 110 bis 130°C und das Zusatzmaterial einen Schmelzpunkt von etwa 180 bis 220°C aufweisen.

20. Laufbelag nach einem der Ansprüche 16 bis 19, dadurch gekennzeichnet, daß das Zusatzmaterial eine geringere Shore-Härte als das Basismaterial (4) aufweist.

21. Laufbelag nach Anspruch 20, dadurch gekennzeichnet, daß das Basismaterial (4) eine Härte von etwa 90 bis 95° Shore A und das Zusatzmaterial eine Härte von etwa 80° Shore A aufweist.

22. Laufbelag nach einem der Ansprüche 16 bis 21, dadurch gekennzeichnet, daß das Basismaterial (4) und das Zusatzmaterial einen etwa übereinstimmendem Abriebverlust aufweisen.

23. Laufbelag nach einem der Ansprüche 16 bis 22, dadurch gekennzeichnet, daß etwa 100 bis 200 g Zusatzmaterial in etwa 1 kg Basismaterial (4) eingemischt sind.

24. Laufbelag nach einem der Ansprüche 16 bis 23, dadurch gekennzeichnet, daß das Granulat (3) einen mittleren Korndurchmesser von etwa 3 bis 5 mm aufweist.

25. Laufbelag nach einem der Ansprüche 16 bis 24, dadurch gekennzeichnet, daß das Granulat (3) eckig ist.

## Claims

1. A method for manufacturing a tread (2) of a wheel (1) or a roller, in which granulated material of thermoplastic added material is worked into a base material (4), characterised in that chemical constituents of the elastic base material (4) are mixed with one another, the granulated material (3) of thermoplastic material with a greater softness and a higher melting point than the base material (4) and roughly the same specific gravity as the base material (4) is mixed with the constituents of the base material and the mixture is cast into the mould for the tread (2) at a temperature which is at least the melting temperature of the base material (4) but is lower than the melting temperature of the added material, and solidifies in said mould.

2. A method according to claim 1, characterised in that the base material (4) and/or the added material is a polyurethane.

3. A method according to claim 1 or 2, characterised in that chemical constituents of the base material (4) melt at a temperature of approximately 110 to 130° and the added material melts at a temperature of approximately 180 to 220°C.

4. A method according to one of claims 1 to 3, characterised in that an added material is used which has a lower Shore-hardness than the base material (4).

5. A method according to claim 4, characterised in that the base material (4) has a hardness of approximately 90 to 95° Shore A and the added material has a hardness of approximately 80° Shore A.

6. A method according to one of claims 1 to 5, characterised in that a base material (4) and an added material with a roughly matching abrasive loss are used.

7. A method according to claim one of claims 1 to 6, characterised in that approximately 100 to 200g of added material is mixed into roughly 1 kg of base material (4).

8. A method according to one of claims 1 to 7, characterised in that a granulated material (3) with a mean grain diameter of approximately 3 to 5mm is used.

9. A method according to one of claims 1 to 8, characterised in that angular granulated material (3) is used.

10. A method according to one of claims 1 to 9, characterised in that an initial added material is melted and after hardening is chopped into angular granulated material (3).

11. A method according to one of claims 1 to 10, characterised in that the constituents of the base material (4) are mixed with one another at a temperature which is at least the melting temperature of the base material (4).

12. A method according to one of claims 1 to 11, characterised in that the granulated material (3) is mixed with the melted base material (4).

13. A method according to one of claims 1 to 12, characterised in that the granulated material (3) before mixing with the melted base material (4) is heated to the temperature of said melted base material.

14. A method according to one of claims 1 to 13, characterised in that the granulated material (3) is mixed with the base material (4) under a vacuum.

15. A method according to one of claims 1 to 14, characterised in that firstly the granulated material (3) is mixed into a prepolymer of the base material (4) and thereafter a cross-linker for producing the base material (4) is added.

16. A method according to one of claims 1 to 15, characterised in that the base material (4) with the mixed granulated material (3) is poured into the mould by hand.

17. A tread of a wheel or roller, said tread comprising an elastic base material (4) and an worked-in granulated material (3) of a thermoplastic added material, characterised in that the granulated material (3) from an added material with a higher softness and a higher melting point than the base material (4) and roughly the same specific gravity as the base material (4) is uniformly mixed into the base material and the base material (4) is cast.

18. A tread according to claim 17, characterised in that the base material (4) and/or the added material is a polyurethane.

19. A tread according to claim 17 or 18, characterised in that chemical constituents of the base material (4) has a melting point of approximately 110 to 130° and the added material has a melting point of approximately 180 to 220°C.

20. A tread according to one of claims 17 to 19, characterised in that the added material has a lower Shore-hardness than the base material (4).

21. A tread according to claim 20, characterised in that the base material (4) has a hardness of approximately 90 to 95° Shore A and the added material has a hardness of approximately 80° Shore A.

22. A tread according to one of claims 17 to 21, characterised in that the base material (4) and the added material have a roughly matching abrasive loss.

23. A tread according to claim one of claims 17 to 22, characterised in that approximately 100 to 200g of added material is mixed into roughly 1 kg of base material (4).

24. A tread according to one of claims 17 to 23, characterised in that the granulated material (3) has a mean grain diameter of approximately 3 to 5mm.

25. A tread according to one of claims 17 to 24, characterised in that the granulated material (3) is angular.

## Revendications

1. Procédé pour la fabrication d'un revêtement (2) de roue (1) ou de roulette selon lequel un granulé (3) composé d'un additif thermoplastique est intégré dans une matière de base (4), caractérisé en ce que des composants chimiques de la matière de base élastique (4) sont mélangés, que le granulé (3), composé d'additif thermoplastique ayant une plus grande mollesse et un point de fusion plus élevé que la matière de base (4) et approximativement le même poids spécifique que la matière de base (4), est mélangé aux composants de la matière de base, et que le mélange est coulé à une température au moins égale à la température de fusion de la matière de base (4), mais inférieure à la température de fusion de l'additif, dans le moule pour le revêtement (2) où il se solidifie.

2. Procédé selon la revendication 1, caractérisé en ce que la matière de base (4) et/ou l'additif sont un polyuréthane.

3. Procédé selon la revendication 1 ou 2, caractérisé en ce que des composants chimiques de la matière de base (4) fondent à une température comprise entre 110° et 130°C environ et l'additif à une température comprise entre 180° à 220°C environ.

4. Procédé selon l'une des revendications 1 à 3, caractérisé en ce que l'on utilise un additif ayant une dureté Shore inférieure à celle de la matière de base (4).

5. Procédé selon la revendication 4, caractérisé en ce que la matière de base (4) présente une dureté comprise entre 90 et 95° Shore A environ et l'additif une dureté égale à 80° Shore A environ.

6. Procédé selon l'une des revendications 1 à 5, caractérisé en ce que l'on utilise une matière de base (4) et un additif ayant une perte par usure à peu près égale.

7. Procédé selon l'une des revendications 1 à 6, caractérisé en ce que l'on mélange 100 à 200 g environ d'additif avec 1 kg environ de matière de base (4).

8. Procédé selon l'une des revendications 1 à 7, caractérisé en ce que l'on utilise un granulé (3) dont la granulométrie est comprise entre 3 et 5 mm environ.

9. Procédé selon l'une des revendications 1 à 8, caractérisé en ce que l'on utilise un granulé (3) anguleux.

10. Procédé selon l'une des revendications 1 à 9, caractérisé en ce qu'un additif initial est fondu puis haché, après durcissement, en un granulé anguleux (3).

11. Procédé selon l'une des revendications 1 à 10, caractérisé en ce que les composants de la matière de base (4) sont mélangés à une température au moins égale à la température de fusion de la matière de base (4).

12. Procédé selon l'une des revendications 1 à 11, caractérisé en ce que le granulé (3) est mélangé à la matière de base (4) fondue.

13. Procédé selon l'une des revendications 1 à 12, caractérisé en ce que le granulé (3) est chauffé à la température de la matière de base (4) avant d'être mélangé à celle-ci.

14. Procédé selon l'une des revendications 1 à 13, caractérisé en ce que le granulé (3) est mélangé sous vide à la matière de base (4).

15. Procédé selon l'une des revendications 1 à 14, caractérisé en ce que le granulé (3) est d'abord mélangé à un prépolymère de la matière de base (4) et qu'un agent de réticulation est ensuite ajouté afin d'obtenir la matière de base (4).

16. Procédé selon l'une des revendications 1 à 15, caractérisé en ce que la matière de base (4) mélangée au granulé (3) est coulée manuellement dans le moule.

17. Revêtement d'une roue ou d'une roulette présentant une matière de base élastique (4) et un granulé (3) intégré composé d'un additif thermoplastique, caractérisé en se que le granulé (3), composé d'un additif ayant une plus grande mollesse et un point de fusion plus élevé que la matière de base (4) et approximativement le même poids volumique que la matière de base (4), est mélangé de manière uniforme à la matière de base (4) et que la matière de base (4) est coulée.

18. Revêtement selon la revendication 17, caractérisé en ce que la matière de base (4) et/ou l'additif sont un polyuréthane.

19. Revêtement selon la revendication 16 ou 18, caractérisé en ce que les composants chimiques de la matière de base (4) ont un point de fusion compris entre 110° et 130°C environ et l'additif un point de fusion compris entre 180° et 220°C environ.

20. Revêtement selon l'une des revendications 16 à 19, caractérisé en ce que l'additif présente une dureté Shore inférieure à celle de la matière de base (4).

21. Revêtement selon la revendication 20, caractérisé en ce que la matière de base (4) présente une dureté Shore comprise entre 90 et 95° Shore A environ et l'additif une dureté égale à 80° Shore A environ.

22. Revêtement selon l'une des revendications 16 à 21, caractérisé en ce que la matière de base et l'additif présentent une perte par usure à peu près égale.

23. Revêtement selon l'une des revendications 16 à 22, caractérisé en ce que l'on mélange 100 à 200 g environ d'additif à 1 kg environ de matière de base (4).

24. Revêtement selon l'une des revendications 16 à 23, caractérisé en ce que le granulé (3) présente une granulométrie comprise entre 3 et 5 mm environ.

25. Revêtement selon l'une des revendications 16 à 24, caractérisé en ce que le granulé (3) est anguleux.
